# EUROPÄISCHE PATENTANMELDUNG

(11) **EP 3 470 347 A1**
(43) Veröffentlichungstag der Anmeldung: **17.04.2019**
(21) Anmeldenummer: 18199792.5
(22) Anmeldetag: 11.10.2018
(51) Int. Cl.: B65D 71/00, B65B 35/50, B65C 1/04, B65B 17/02

(54) **VERFAHREN UND VERPACKUNGSMASCHINE ZUR HERSTELLUNG VON MULTIPACKS**

(30) Priorität: 12.10.2017 DE 102017123706
(71) Anmelder: MULTIVAC Marking & Inspection GmbH & Co. KG, 32130 Enger (DE)
(72) Erfinder: FRIEDHOFF, Hauke, 32052 Herford (DE); AUSTERMEIER, Georg, 33161 Hövelhof (DE)
(74) Vertreter: Grünecker Patent- und Rechtsanwälte PartG mbB

(57) **Zusammenfassung**

Verpackungsmaschine (1) zum Gruppieren von einzelnen Packungseinheiten (3), wobei die Verpackungsmaschine (1) einen Zuförderer (5), ein Fördersystem (7), eine Gruppierstation (9) und einen Etikettierer (11) umfasst. Die Verpackungsmaschine (1) ist dazu konfiguriert, mindestens drei Packungseinheiten (3) zu einem Packungsstapel (23) übereinanderzustapeln und den Packungsstapel (23) zumindest teilweise mit einem Etikett (27) zu umschließen. Die Verpackungsmaschine weist desweitern einen Andrückstempel (37) auf, der mindestens eine scharnierartige Lasche (31), welche an einer Hauptfläche (57) des Etiketts (27) ausgebildet ist, an eine Seitenfläche (51) einer mittleren Packungseinheit (3) des Packungsstapels (23) andrückt.

## Beschreibung

Die vorliegende Erfindung betrifft ein Verfahren und eine Verpackungsmaschine zum Herstellen von Packungsstapeln, sogenannten Multipacks, sowie solche Packungsstapel selbst.

Versiegelte Verpackungen, insbesondere Kunststoffverpackungen, finden für vielfältige Produkte Verwendung. Häufig werden Lebensmittelprodukte in eine tiefgezogene Kunststoffschale eingelegt oder portioniert und anschließend die Schale mit einer Kunststofffolie mittels einer Heißsiegelnaht, Schweißnaht oder Haftklebenaht luftdicht verschlossen. Um dem Verbraucher eine Bevorratung zu ermöglichen, ist es zunehmend beliebt, mehrere versiegelte Packungseinheiten als Stapel, Bündel oder Gruppe zu verkaufen. Aus dieser Gruppe können nacheinander die einzelnen Packungseinheiten entnommen und geöffnet werden, während die verbleibenden Packungseinheiten weiterhin originalversiegelt aufbewahrt werden können, was die Haltbarkeit der darin befindlichen Produkte gewährleistet. Auch können derartige Bündel mit einem attraktiven Preis pro Packungseinheit angeboten werden. Zudem ist die Handhabung bei Einkauf und Transport für den Verbraucher angenehmer.

Die noch nicht veröffentlichte deutsche Patentanmeldung DE 10 2017 116 743 beschreibt eine Vorrichtung und ein Verfahren zum Gruppieren von Einzelpackungen.

Der Erfindung liegt die Aufgabe zugrunde, ein Verfahren und eine Verpackungsmaschine zur verbesserten Herstellung von Packungsstapeln, sogenannten Multipacks, sowie Packungsstapel mit verbesserten Eigenschaften bereitzustellen, wobei die Verpackungsmaschine für eine Vielzahl von Packungstypen verwendbar sein soll.

Die Aufgabe wird gelöst durch ein Verfahren gemäß Anspruch 1, eine Verpackungsmaschine mit den Merkmalen des Anspruchs 9 sowie einem Packungsstapel gemäß Anspruch 14. Vorteilhafte Weiterbildungen der Erfindung sind in den Unteransprüchen angegeben.

Eine erfindungsgemäße Verpackungsmaschine zum Gruppieren von einzelnen Packungseinheiten umfasst einen Zuförderer, ein Fördersystem, eine Gruppierstation und einen Etikettierer. Die Verpackungsmaschine ist dazu konfiguriert, mittels der Gruppierstation mindestens drei Packungseinheiten zu einem Packungsstapel übereinanderzustapeln und den Packungsstapel zumindest teilweise mit einem Etikett zu umschließen. Desweiteren weist die Verpackungsmaschine einen Andrückstempel auf, der dazu konfiguriert ist, um mindestens eine scharnierartige Lasche des Etiketts an einer Seitenfläche einer mittleren Packungseinheit des Packungsstapels anzudrücken. Der Andrückstempel ist dazu insbesondere kleiner oder im Wesentlichen gleich der Größe der Lasche. Er kann eine zur Seitenfläche der mittleren Packungseinheit komplementäre Form aufweisen und die Klebeverbindung der Lasche mit der Seitenfläche durch eine einzelne Andrückbewegung, welche im Wesentlichen einer linearen Vor- und Zurückbewegung entspricht, herstellen. Dazu kann ein jeweils passender Andrückstempel austauschbar angeordnet sein. Alternativ kann der Andrückstempel auch als drehbare Rolle ausgebildet sein und die Lasche mittels einer mehrachsigen Bewegung andrücken. Die Verpackungsmaschine ermöglicht es somit, einen Packungsstapel aus Packungseinheiten, ein sogenanntes Multipack, herzustellen, bei welchem die Packungseinheiten stabil gruppiert sind. Die Lasche ist derart ausgefertigt, dass die flächige Klebung, die sie mit einer Seitenfläche der mittleren Packungseinheit herstellen kann, in allen Dimensionen größer als die Dicke des oberen Randes der Packungseinheit ist. Dadurch, dass die eine oder mehreren mittlere Packungseinheiten, also jene zwischen einer oberen und einer unteren Packungseinheit, mit der/den Lasche(n) des Etiketts mittels einer insbesondere flächigen Klebeverbindung verbunden sind, sind auch diese mittleren Packungseinheiten fixiert und gegen ein Herausrutschen aus dem Packungsstapel gesichert.

In einer bevorzugten Ausführungsform ist der Etikettierer ein Querbahnetikettierer, d.h. dass ein vorzugsweise längliches Etikett quer zur Förderrichtung aufgebracht wird. So kann der Packungsstapel zum Beispiel zwischen einem vorderen und einem hinteren Mover des Fördersystems gehalten werden und das Etikett kann aufgebracht werden, ohne dass die nach oben über den Packungsstapel hinausragenden Mover der Aufbringung des Etiketts hinderlich wären.

Vorzugsweise umfasst die Gruppierstation zwei gegenüberliegende Zahnriementransporte mit Mitnehmerleisten und ist einstellbar, um Packungseinheiten unterschiedlicher Größen jeweils zu gruppieren. So kann insbesondere durch einfaches Verstellen des Abstands der Zahnriementransporte die Gruppierstation an die Größen der zu stapelnden Packungseinheiten angepasst werden. Die Zahnriementransporte bewegen sich bevorzugt im Wesentlichen vertikal und durch die Einstellung der Abstände der Mitnehmerleisten entlang der Zahnriementransporte können unterschiedlich hohe Packungseinheiten gestapelt werden, bzw. unterschiedliche Stapelhöhen realisiert werden.

In einer zweckmäßigen Variante weist das Fördersystem separat steuerbare Mover auf, welche derart steuerbar sind, um Packungseinheiten und/oder Packungsstapel kraftschlüssig zwischen jeweils zwei Mover einzuspannen. Das Fördersystem kann flexibel an die Produktionsbedingungen, wie zum Beispiel eine vorgegebene oder gewünschte Produktionsgeschwindigkeit, angepasst werden. Außerdem werden die Packungsstapel sicher transportiert.

In einer vorteilhaften Variante weist das Fördersystem eine Aussparung auf, die es erlaubt, das Etikett an einer Unterseite des Packungsstapels anzudrücken. Wie weiter unten näher erläutert, wird ein Etikett so auf einen Packungsstapel angebracht, dass es sich von einer Oberseite über eine seitliche Seite bis zu einer Unterseite des Packungsstapels erstreckt. Mit der Aussparung bleibt mittig eine ausreichende Auflagefläche für den Packungsstapel vorhanden und es ist gleichzeitig möglich, das Etikett auf einer ausreichend großen Fläche der Unterseite zum Beispiel durch eine Rolle anzudrücken.

Ein erfindungsgemäßer Packungsstapel weist eine obere, eine untere und mindestens eine mittlere Packungseinheit auf, welche übereinander angeordnet sind. Desweiteren umfasst der Packungsstapel mindestens ein Etikett, welches eine Oberseite, eine seitliche Seite und eine Unterseite des Packungsstapels zumindest teilweise umspannt. Das Etikett weist Etikettenränder und eine von den Etikettenrändern beabstandete Hauptfläche auf, wobei die Hauptfläche eine oder mehrere scharnierartig mit der Hauptfläche verbundene Laschen aufweist, welche mit jeweils einer Seitenfläche einer mittleren Packungseinheit des Packungsstapels mittels einer flächigen Haftung verbunden sind. Das Etikett hält also nicht nur die oberste und unterste Packungseinheit durch eine Klebung verbunden, sondern fixiert auch mittels der Lasche die mittleren Packungseinheiten durch eine insbesondere flächige Klebung gegen ein Verrutschen. So bleiben auch bei einem Drehen und Kippen des Packungsstapels alle Packungseinheiten fest in ihrer Position und können nicht aus dem Packungsstapel herausrutschen. Die Lasche ist derart ausgefertigt, dass die flächige Klebung, die sie mit einer Seitenfläche der mittleren Packungseinheit herstellen kann, in allen Dimensionen größer als die Dicke des oberen Randes der Packungseinheit ist.

In einer bevorzugten Variante weist das Etikett mindestens eine Perforation auf, welche nach Anbringung des Etiketts auf einen Packungsstapel bevorzugt seitlich in horizontaler Richtung angeordnet ist. Die Perforation ist dazu geeignet, ein Trennen der Packungseinheiten voneinander zu erlauben. Da die Klebungen des Etiketts meist sehr stabil ausgeführt sind und ein Abziehen des Etiketts entlang einer Klebefläche mühsam ist, kann so das Etikett entlang der Perforation ohne Hilfsmittel, wie zum Beispiel einer Schere, aufgerissen und eine einzelne Packungseinheit vom Stapel entnommen werden.

Ein erfindungsgemäßes Verfahren zum Gruppieren von mindestens drei Packungseinheiten zu einem Packungsstapel, umfasst folgende Verfahrensschritte:
Zuführen der einzelnen Packungseinheiten mittels eines Zuförderers zu einer Gruppierstation;
Übereinanderstapeln der Packungseinheiten zu einem Packungsstapel durch die Gruppierstation;
Ablegen des Packungsstapels auf ein Fördersystem;
Zuführen des Packungsstapels zu einem Etikettierer durch das Fördersystem;
Aufbringen eines Etiketts auf eine Oberseite des Packungsstapels durch den Etikettierer, wobei das Etikett einen seitlichen ersten Überstand über den Packungsstapel aufweist;
Umklappen des ersten Überstands des Etiketts um eine erste obere und eine erste untere Kante des Packungsstapels;
Andrücken des ersten Überstands auf eine Unterseite des Packungsstapels;
Andrücken mindestens einer Lasche, die scharnierartig mit einer Hauptfläche des ersten Überstands verbunden ist, an eine Seitenfläche einer mittleren Packungseinheit des Packungsstapels.

Vorzugsweise weist das Etikett einen seitlichen zweiten Überstand auf und wird über eine zweite obere Kante und eine zweite untere Kante des Packungsstapels umgeklappt. Die zweite obere und zweite untere Kante befinden sich zweckmäßig auf der der ersten oberen und ersten unteren Kante gegenüberliegenden Seite. So wird der Packungsstapel an zwei gegenüberliegenden Seiten eingefasst und die Anordnung der Packungseinheiten stabil gehalten.

Typischerweise wird der zweite Überstand auf der Unterseite des Packungsstapels angedrückt.

In einer gängigen Variante wird eine zweite Lasche, die scharnierartig mit einer Hauptfläche des zweiten Überstands verbunden ist, an eine Seitenfläche der mittleren Packungseinheit des Packungsstapels angedrückt, insbesondere flächig angedrückt.

In einer weiteren Variante wird ein zweites Etikett auf die Oberseite des Packungsstapels aufgebracht, wobei das zweite Etikett einen seitlichen zweiten Überstand über den Packungsstapel aufweist. Da so ein Teil der Oberseite des Packungsstapels frei bleiben kann, ist es möglich, den Aufdruck der obersten Packungseinheit zumindest teilweise weiterhin zu erkennen. Auch kann damit eine Materialeinsparung erzielt werden.

Bevorzugt wird der zweite Überstand des zweiten Etiketts um eine zweite obere und eine zweite untere Kante des Packungsstapels umgeklappt. Es kann also entweder ein einziges Etikett über zwei gegenüberliegende Seiten des Stapels bis zu dessen Unterseite laufen, oder es kann jeweils ein Etikett von zweien oder mehreren eine der beiden Seiten überspannen.

Zweckmäßig wird der zweite Überstand des zweiten Etiketts auf der Unterseite des Packungsstapels angedrückt.

In einer bevorzugten Variante wird eine Lasche, die scharnierartig mit einer Hauptfläche des zweiten Überstands des zweiten Etiketts verbunden ist, an eine Seitenfläche der mittleren Packungseinheit des Packungsstapels angedrückt, insbesondere flächig angedrückt.

Im Folgenden werden Ausführungsbeispiele der Erfindung anhand der Figuren näher beschrieben. Dabei zeigen
- Figur 1:: eine perspektivische Seitenansicht einer Verpackungsmaschine zum Gruppieren von einzelnen Packungseinheiten,
- Figur 2a:: eine perspektivische Seitenansicht eines Packungsstapels mit auf der Oberseite aufgebrachtem Etikett mit einem ersten und einem zweiten Überstand,
- Figur 2b:: eine perspektivische Seitenansicht eines Packungsstapels mit einem um eine erste obere Kante umgeklappten ersten Überstand und einen um eine zweite obere Kante umgeklappten zweiten Überstand,
- Figur 2c:: eine perspektivische Seitenansicht eines Packungsstapels mit auf der Unterseite des Packungsstapels angedrückten Überständen des Etiketts und einer an einer Seitenfläche einer mittleren Packungseinheit angedrückten Lasche,
- Figur 2d:: eine perspektivische Vorderansicht eines Packungsstapels mit auf der Unterseite des Packungsstapels angedrückten Überständen des Etiketts entsprechend Figur 2c,
- Figur 3a:: eine Vorderansicht eines erfindungsgemäßen Etiketts mit zwei Laschen,
- Figur 3b:: eine perspektivische Seitenansicht eines erfindungsgemäßen Etiketts mit zwei Laschen,
- Figur 4a:: eine perspektivische Seitenansicht eines Packungsstapels mit einem um eine erste obere Kante umgeklappten ersten Überstand eines ersten Etiketts und einem um eine zweite obere Kante umgeklappten zweiten Etikett,
- Figur 4b:: eine perspektivische Seitenansicht eines Packungsstapels mit auf der Unterseite des Packungsstapels angedrückten Überständen des ersten und zweiten Etiketts und an den Seitenflächen einer mittleren Packungseinheit angedrückten Laschen,
- Figur 5a:: eine Vorderansicht eines ersten und eines zweiten erfindungsgemäßen Etiketts mit je einer Lasche und
- Figur 5b:: eine perspektivische Seitenansicht eines ersten und eines zweiten erfindungsgemäßen Etiketts mit je einer Lasche.

Einander entsprechende Komponenten sind in den Figuren jeweils mit gleichen Bezugszeichen versehen.

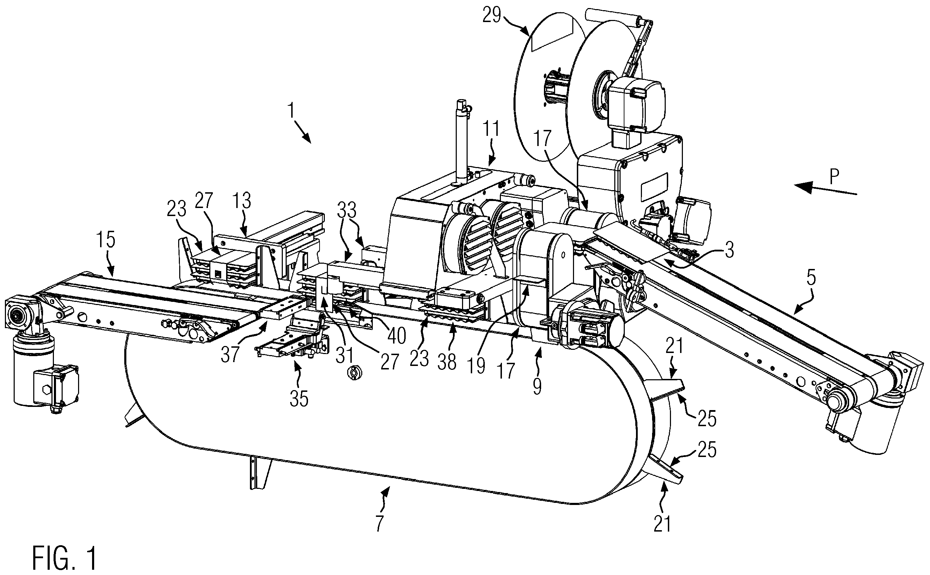

Figur 1 zeigt eine Verpackungsmaschine 1 zum Gruppieren von einzelnen Packungseinheiten 3 in einer perspektivischen Seitenansicht. Die Verpackungsmaschine 1 umfasst einen Zuförderer 5, ein Fördersystem 7, eine Gruppierstation 9 und einen Etikettierer 11. Zudem sind ein optionaler Schieber 13 und ein optionaler Abförderer 15 dargestellt, welche in Abhängigkeit der Produktionsorganisation auch weggelassen oder modifziert sein können. Die Gruppierstation 9 weist zwei im Wesentlichen vertikal orientierte gegenüberliegende Zahnriementransporte 17 mit Mitnehmerleisten 19 auf. Die Förderstation 7 weist mehrere Mover 21 auf, welche üblicherweise mittels eines elektromagnetischen Mechanismus individuell bewegt werden können. Durch die Gruppierstation 9 wird jeweils ein Packungsstapel 23 zwischen die Seiten der Mover 21, welche einen Anschlag 25 aufweisen, abgelegt und zwischen die Mover 21 mit wohldosierter Kraft geklemmt. Jeweils zwei Mover 21 bewegen so auf einer Oberseite des Fördersystems 7 einen Packungsstapel 23 entlang einer Produktionsrichtung P und kehren über eine Unterseite des Fördersystems 7 wieder an ihre Ausgangsposition zurück. Etiketten 27 werden von einer Rolle 29, welche hier leer gezeigt ist, zugeführt und weisen mindestens eine Lasche 31 auf. Zum Umklappen und Andrücken des Etiketts 27 dienen erste Rollen 33 und zweite Rollen 35 und zum Andrücken der Lasche 31 dient ein Andrückstempel 37. Um eine Unterseite 38 des Packungsstapels 23 für die zweiten Rollen 35 zum Andrücken von Überständen des Etiketts 27 zugänglich zu machen, weist das Fördersystem 7 beidseitig eine Aussparung 40 auf, welche die Auflagefläche für den Packungsstapel 23 auf ein nötiges Minimum reduziert.

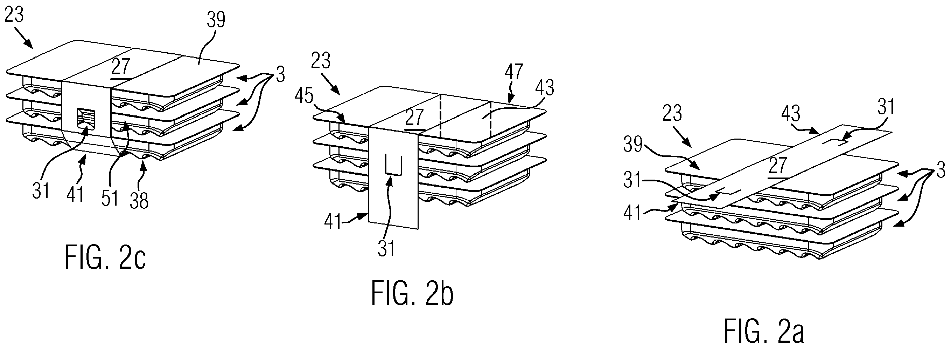

Figur 2a zeigt einen Packungsstapel 23 in perspektivischer Seitenansicht, wobei der Packungsstapel 23 drei übereinander angeordnete Packungseinheiten 3 und ein auf der Oberseite 39 des Packungsstapels 23, welche gleichzeitig die Oberseite der obersten Packungseinheit 3 ist, aufgebrachtes Etikett 27 mit einem ersten und einem zweiten Überstand 41, 43 und je einer Lasche 31 pro Überstand 41, 43 aufweist.

Figur 2b zeigt eine perspektivische Seitenansicht eines Packungsstapels 23 mit einem um eine erste obere Kante 45 umgeklappten ersten Überstand 41 und einem um eine zweite obere Kante 47 umgeklappten zweiten Überstand 43, wobei hier aufgrund der Perspektive nur der erste Überstand 41 sichtbar ist.

Figur 2c zeigt eine perspektivische Seitenansicht eines Packungsstapels 23 mit auf der Unterseite 38 des Packungsstapels 23, welche gleichzeitig die Unterseite der untersten Packungseinheit 3 ist, angedrückten Überständen 41, 43, wobei hier aufgrund der Perspektive nur der erste Überstand 41 sichtbar ist. Die Lasche 31, welche in dieser Ausführungsform beispielhaft an drei Seiten geschnitten oder gestanzt ist, ist an einer Seitenfläche 51 einer mittleren Packungseinheit 3 angedrückt.

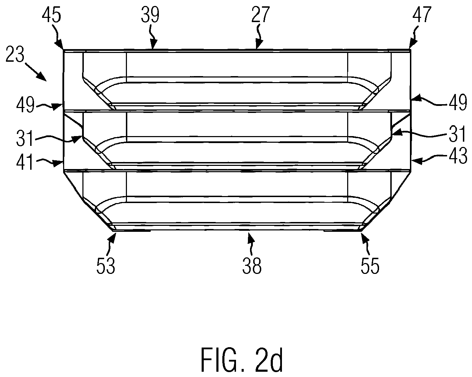

Figur 2d zeigt eine Vorderansicht eines Packungsstapels 23 mit auf der Unterseite 38 des Packungsstapels 23 angedrückten ersten und zweiten Überständen 41, 43 des Etiketts 27 entsprechend Figur 2c. Zu erkennen ist, wie die ersten und zweiten Überstände 41, 43 um eine erste und eine zweite obere Kante 45, 47 sowie eine erste und zweite untere Kante 53, 55 umgeklappt sind und sich auch der Form der seitlichen Seite 49 des Packungsstapels 23 angepasst haben.

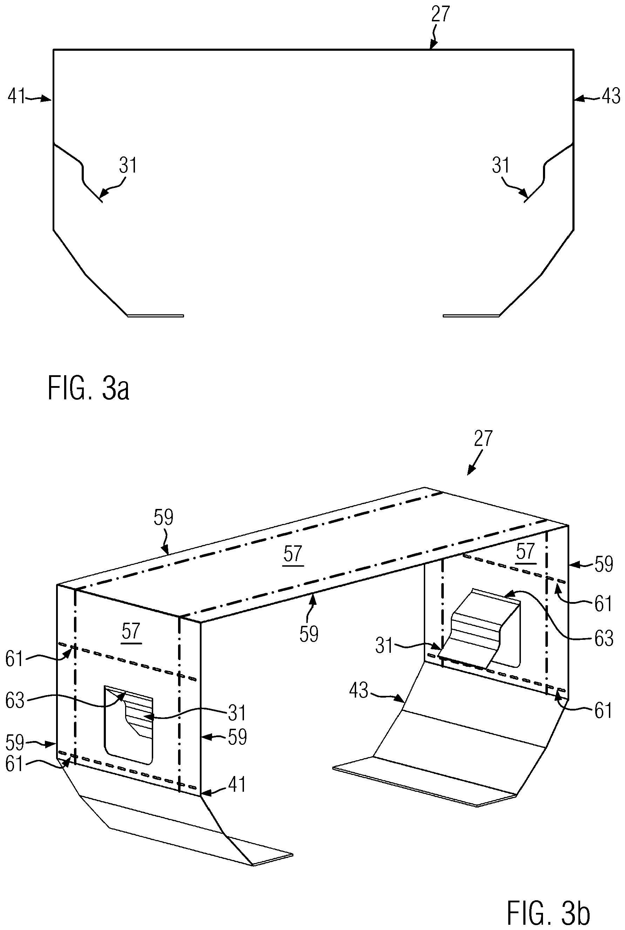

Figur 3a zeigt eine Vorderansicht eines erfindungsgemäßen Etiketts 27 mit zwei Laschen 31 welche jeweils an einem ersten und einem zweiten Überstand 41, 43 ausgebildet sind. Das Etikett 27 sowie insbesondere die Laschen 31 sind in der Form dargestellt, wie sie vollständig an dem Packungsstapel 23 der vorangegangenen Figuren angedrückt sind (ohne Darstellung der Packungseinheiten 3). Zu erkennen ist, dass das Etikett 27 und die Laschen 31 derart konfiguriert sind, dass sie der Form des Packungsstapels 23 folgen können.

Figur 3b zeigt eine perspektivische Seitenansicht eines erfindungsgemäßen Etiketts 27 mit zwei Laschen 31 in einem angedrückten Zustand, in welchem Teile des ersten und zweiten Überstands 41, 43 sowie die Laschen 31 durch das Andrücken der Form des Packungsstapels 23 folgen (ohne Darstellung der Packungseinheiten 3). In der Darstellung wird innerhalb der gestrichpunkteten Linien eine Hauptfläche 57 des Etiketts 27 bzw. des ersten Überstands 41 und des zweiten Überstands 43 definiert, wobei sich die Hauptfläche 57 dadurch auszeichnet, einen geeigneten Bereich zur Ausbildung der Laschen 31 darzustellen, da der Bereich ausreichend von den Etikettenrändern 59 des Etiketts 27 beabstandet ist, um die Stabilität des Etiketts 27 auch bei einem Stanzen oder Schneiden der Laschen 31 zu gewährleisten. Die gestrichelten Linien stellen mögliche Perforationen 61 dar, an welcher das Etikett 27 mit angemessenem Kraftaufwand trennbar ist, um so das Öffnen des Packungsstapels 23 und das Trennen der Packungseinheiten 3 zu erleichtern. Die Laschen 31 sind derart ausgefertigt, dass die flächige Klebeverbindung, die sie jeweils mit einer Seitenfläche 51 der mittleren Packungseinheit 3 herstellen, in allen Dimension größer als die Dicke des oberen Randes der Packungseinheit 3 ist. Über eine Scharnierseite 63 sind die Laschen 31 scharnierartig an die Hauptfläche 57 des Etiketts 27 angelenkt.

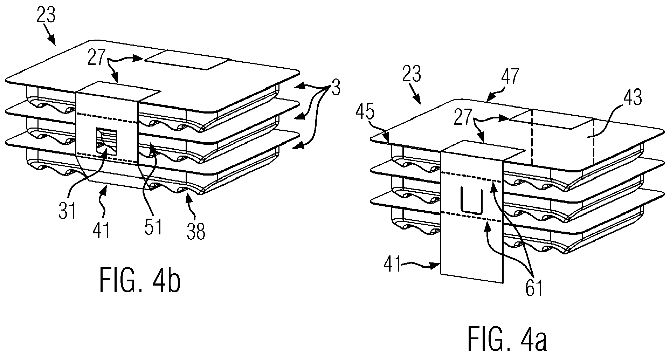

Figur 4a zeigt eine Variante eines Packungsstapels 23 in einer perspektivischen Seitenansicht mit zwei separaten Etiketten 27, die jeweils eine Seite 49 des Packungsstapels 23 teilweise umschließen. Der erste Überstand 41 des ersten Etiketts 27 ist um eine erste obere Kante 45 umgeklappt und der zweite Überstand 43 des zweiten Etiketts 27 ist um eine zweite obere Kante 47 umgeklappt.

Figur 4b zeigt eine perspektivische Seitenansicht eines Packungsstapels 23 mit auf der Unterseite 38 des Packungsstapels 23 angedrückten Überständen 41, 43 des ersten und zweiten Etiketts 27 und an den Seitenflächen 51 einer mittleren Packungseinheit 3 angedrückten Laschen 31. Auch das zweite Etikett 27 weist eine Lasche 31 auf, welche aufgrund der Perspektive hier nicht sichtbar ist.

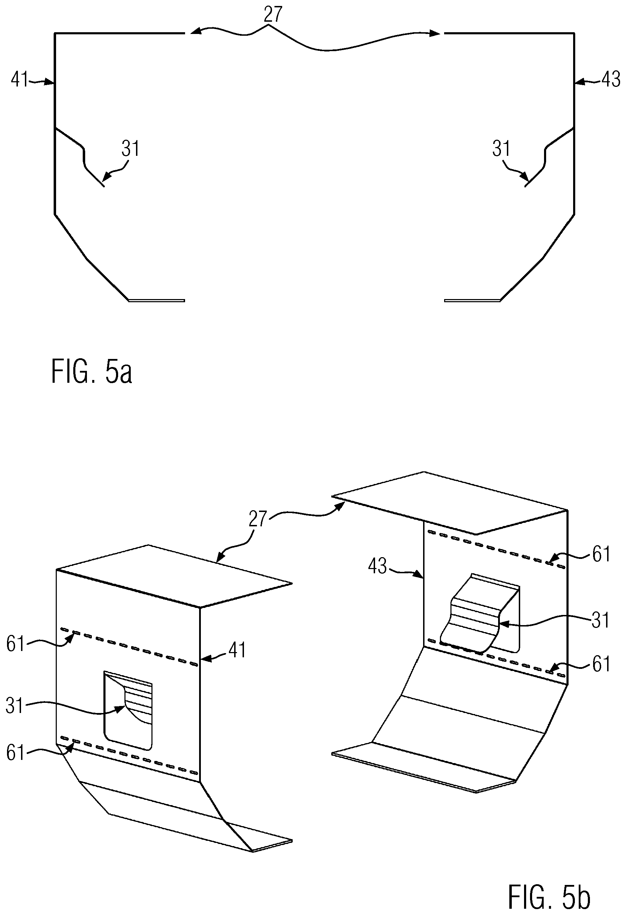

Figur 5a zeigt eine Vorderansicht eines ersten und eines zweiten erfindungsgemäßen Etiketts 27 mit je einer Lasche 31, welche jeweils an einem ersten und einem zweiten Überstand 41, 43 ausgebildet sind. Die Etiketten 27 sowie insbesondere die Laschen 31 sind analog zu Figur 3a in der Form dargestellt, wie sie vollständig an dem Packungsstapel 23 entsprechend der vorangegangenen Figuren angedrückt sind (ohne Darstellung der Packungseinheiten 3).

Figur 5b zeigt eine perspektivische Seitenansicht eines ersten und eines zweiten erfindungsgemäßen Etiketts 27 mit je einer Lasche 31 in einem angedrückten Zustand, in welchem Teile des ersten und zweiten Überstands 41, 43 sowie die Laschen 31 durch das Andrücken der Form des Packungsstapels 23 folgen.

Wie bereits für Figur 3b erläutert, sind auch in den Figuren 4a, 4b und 5b optionale Perforationen 61 dargestellt, welche eine verbesserte Möglichkeit zum Trennen der Packungseinheiten 3 bieten.

Im Folgenden wird die Funktionsweise der Verpackungsmaschine 1 anhand der Figuren näher beschrieben. Mittels des Zuförderers 5, welcher zum Beispiel ein Bandförderer sein kann, werden die einzelnen Packungseinheiten 3 zu der Gruppierstation 9 transportiert und in dieser von oben sukzessive zwischen zwei Zahnriementransporten 17 abgelegt. Die Zahnriementransporte 17 weisen Mitnehmerleisten 19 auf, auf welchen die Packungseinheiten 3 mit einer Unterseite oder einem seitlichen Rand aufliegen. Die Mitnehmerleisten 19, welche zweckmäßigerweise die Packungseinheiten 3 in einer oberen und zu einer Kante des Zuförderers 5 benachbarten Position aufnehmen, werden, wenn die vollständige Anzahl von Packungseinheiten 3 für einen Packungsstapel 23 erreicht ist, mittels der Zahnriementransporte 17 nach unten bewegt, sodass der Packungsstapel 23 auf dem Fördersystem 7 zwischen zwei Movern 21 abgelegt wird.

Die Mover 21, welche einzeln elektronisch gesteuert werden können und vor dem Ablegen des Packungsstapels 23 unterhalb der Gruppierstation 9 positioniert wurden, klemmen sodann den Packungsstapel 23 zwischen ihre Anschläge 25 und transportieren den Packungsstapel 23 zu dem Etikettierer 11. Neben der Ausrichtung der Packungseinheiten 3 durch die Gruppierstation 9 können optional auch seitliche Führungsleisten vorhanden sein, welche die Packungseinheiten 3 des Packungsstapels 23 beim Transport zum Etikettierer 11 zusätzlich ausrichten.

Der Etikettierer 11 kann zum Beispiel ein Querbahnetikettierer sein und ein oder mehrere Etiketten 27 auf die Oberseite 39 des Packungsstapels 23 applizieren. Bei üblichen Querbahnetikettierern werden von einer Rolle 29 auf einem Träger zugeführte Etiketten 27 an einer Abstreifkante von dem Träger gelöst und mittels eines pneumatischen Systems über dem Packungsstapel 23 positioniert und auf diesem angedrückt. Hierbei können ein oder mehrere Etiketten 27 auf die Oberseite 39 des Packungsstapels 23 appliziert werden. Gemäß der vorliegenden Erfindung wird dabei das Etikett 27 so positioniert, dass es mindestens einen ersten Überstand 41 über den Packungsstapel 23 hinaus aufweist. Gemäß einer Ausführungsform kann das Etikett 27 sich auch über die gesamte Breite des Packungsstapels 23 erstrecken und an einer zweiten Seite einen zweiten Überstand 43 über den Packungsstapel 23 aufweisen.

Befindet sich das Etikett 27 im Wesentlichen in der Ebene der Oberseite 39 des Packungsstapels 23, nachdem es von dem Etikettierer 11 auf diesen aufgebracht wurde, so folgt im nächsten Schritt das Umklappen des ersten und zweiten Überstands 41, 43 um eine erste und zweite obere Kante 45, 47 und eine erste und zweite untere Kante 53, 55 sodass die Überstände 41, 43 den Packungsstapel 23 im Wesentlichen C-förmig seitlich umschließen. In der in Figur 1 dargestellten Ausführungsform erfolgt das Umklappen der Überstände 41, 43 an den oberen Kanten 45, 47 durch erste Rollen 33 und das Umklappen an den unteren Kanten 53, 55 durch zweite Rollen 35. Das Andrücken kann dabei während der Bewegung des Packungsstapels 23 entlang der Produktionsrichtung P passiv durch die ersten Rollen 33 erfolgen, welche in einem wohldefinierten Abstand zum Packungsstapel 23 oder mit einer wohldefinierten zum Packungsstapel 23 hingerichteten elastischen Rückstellkraft angeordnet sind. Alternativ dazu können die ersten Rollen 33 auch einen aktiven Antrieb aufweisen, um eine Hin- und Zurückbewegung zum Andrücken der Überstände 41, 43 auszuführen. Selbiges gilt für die zweiten Rollen 35, welche in Figur 1 in der aktiven Variante dargestellt sind.

Mittels einer aktiven Bewegung eines Andrückstempels 37 wird die Lasche 31 an eine Seitenfläche 51 einer mittleren Packungseinheit 3 angedrückt. Die Lasche 31 kann, wie dargestellt, bereits vor dem Aufbringen des Etiketts 27 auf den Packungsstapel 23 gestanzt oder geschnitten sein. Alternativ dazu ist es jedoch auch möglich, durch ein entsprechend geformtes Schneidwerkzeug, welches zum Beispiel seitlich gegen das den Packungsstapel 23 umspannende Etikett 27 gefahren wird, die Stanzung erst unmittelbar vor dem Schritt des Andrückens der Lasche 31 vorzunehmen. Generell kann das Andrücken des Etiketts 27 entweder unmittelbar am Ort des Etikettierers 11 oder, wie dargestellt, in einer benachbarten Position entlang der Produktionsrichtung P, im Sinne einer Andrückstation, stattfinden.

Nach dem Andrückvorgang wird gemäß der dargestellten Ausführungsform der fertige Packungsstapel 23 durch die Mover 21 weitertransportiert und schließlich von einem Schieber 13 auf einen Abförderer 15 geschoben, um von diesem weitertransportiert zu werden, um zum Beispiel in einem Karton verstaut zu werden. Die Mover 21 bewegen sich sodann über die Unterseite des Fördersystems 7 zu ihrer Ausgangsposition zurück, wobei mehrere Mover 21 jeweils vor der Gruppierstation 9 in einer Warteschlange bereitstehen können. Der Weiter- oder Abtransport des Packungsstapels 23 nach seiner Fertigstellung ist nicht auf die dargestellte Art begrenzt, sondern kann auf jede erdenkliche Art, wie zum Beispiel durch direkte Entnahme durch einen Greifarm oder einen Bediener, erfolgen.

Ausgehend von der oben dargestellten Ausführungsform einer Verpackungsmaschine 1 sind vielerlei Variationen derselben möglich. So kann zum Beispiel das Stapeln der einzelnen Packungseinheiten 3 anstatt mit einer Gruppierstation 9 auch durch eine Auf- und Abbewegung des Zuförderers 5 erfolgen, der damit die Packungseinheiten 3 direkt auf dem Fördersystem 7 ablegt. Gegebenenfalls kann ein hinterer Mover 21 dann jeweils dem Packungsstapel 23 angenähert werden, wenn der Zuförderer 5 sich in einer oberen Position befindet. Das Andrücken der Etiketten 27 kann auch direkt am Ort des Etikettierers 11 erfolgen. Dabei ist es auch denkbar, dass nicht nur zwei Etiketten 27 im Sinne eines linken und rechten Etiketts 27 aufgebracht werden, sondern bei größeren Packungseinheiten 3 auch mehrere parallel zueinander orientierte Etiketten 27 aufgebracht werden. Werden ein oder mehrere Etiketten 27 aufgebracht, welche entsprechend der Figuren 2a bis 3b die Oberseite 39 des Packungsstapels 23 überspannen, so können Bereiche der Etiketten 27 transparent ausgefertigt sein, um weiterhin die Oberseite 39 des Packungsstapels 23 bzw. der obersten Packungseinheit 3 zumindest teilweise wahrnehmen zu können. Das Andrücken und Umklappen der Etiketten 27 kann anstatt der gezeigten Rollen 33, 35 auch durch andere mechanische Vorrichtungen, wie zum Beispiel Faltleisten, erfolgen. Anstelle des gezeigten Fördersystems 7 mit separat steuerbaren Movern 21 wäre es auch denkbar, andere Fördersysteme, wie zum Beispiel einen Linearbandförderer mit Mitnehmerleisten, einzusetzen. Die Laschen 31 sind nicht auf die hier gezeigte Form mit drei gestanzten Seiten und einer scharnierartigen Seite beschränkt, sondern können zum Beispiel auch in Dreiecksform mit nur zwei gestanzten Seiten ausgeführt sein.

## Patentansprüche

1. Verfahren zum Gruppieren von mindestens drei Packungseinheiten (3) zu einem Packungsstapel (23), **gekennzeichnet durch** folgende Verfahrensschritte:
Zuführen der einzelnen Packungseinheiten (3) mittels eines Zuförderers (5) zu einer Gruppierstation (9);
Übereinanderstapeln der Packungseinheiten (3) zu einem Packungsstapel (23) durch die Gruppierstation (9);
Ablegen des Packungsstapels (23) auf ein Fördersystem (7);
Zuführen des Packungsstapels (23) zu einem Etikettierer (11) durch das Fördersystem (7);
Aufbringen eines Etiketts (27) auf eine Oberseite (39) des Packungsstapels (23) durch den Etikettierer (11), wobei das Etikett (27) einen seitlichen ersten Überstand (41) über den Packungsstapel (23) aufweist;
Umklappen des ersten Überstands (41) des Etiketts (27) um eine erste obere und eine erste untere Kante (45, 53) des Packungsstapels (23);
Andrücken des ersten Überstands (41) auf eine Unterseite (38) des Packungsstapels (23);
Andrücken mindestens einer Lasche (31), die scharnierartig mit einer Hauptfläche (57) des ersten Überstands (41) verbunden ist, an eine Seitenfläche (51) einer mittleren Packungseinheit (3) des Packungsstapels (23).

2. Verfahren nach Anspruch 1, **dadurch gekennzeichnet, dass** das Etikett (27) einen seitlichen zweiten Überstand (43) aufweist und über eine zweite obere Kante (47) und eine zweite untere Kante (55) des Packungsstapels (23) umgeklappt wird.

3. Verfahren nach Anspruch 2, **dadurch gekennzeichnet, dass** der zweite Überstand (43) auf der Unterseite (38) des Packungsstapels (23) angedrückt wird.

4. Verfahren nach Anspruch 3, **dadurch gekennzeichnet, dass** eine zweite Lasche (31), die scharnierartig mit einer Hauptfläche (57) des zweiten Überstands (43) verbunden ist, an eine Seitenfläche (51) der mittleren Packungseinheit (3) des Packungsstapels (23) angedrückt wird.

5. Verfahren nach Anspruch 1, **dadurch gekennzeichnet, dass** ein zweites Etikett (27) auf die Oberseite (39) des Packungsstapels (23) aufgebracht wird, wobei das zweite Etikett (27) einen seitlichen zweiten Überstand (43) über den Packungsstapel (23) aufweist.

6. Verfahren nach Anspruch 5, **dadurch gekennzeichnet, dass** der zweite Überstand (43) des zweiten Etiketts (27) um eine zweite obere und eine zweite untere Kante (47, 55) des Packungsstapels (23) umgeklappt wird.

7. Verfahren nach Anspruch 5 oder 6, **dadurch gekennzeichnet, dass** der zweite Überstand (43) des zweiten Etiketts (27) auf der Unterseite (38) des Packungsstapels (23) angedrückt wird.

8. Verfahren nach einem der Ansprüche 5 bis 7, **dadurch gekennzeichnet, dass** eine Lasche (31), die scharnierartig mit einer Hauptfläche (57) des zweiten Überstands (43) des zweiten Etiketts (27) verbunden ist, an eine Seitenfläche (51) der mittleren Packungseinheit (3) des Packungsstapels (23) angedrückt wird.

9. Verpackungsmaschine (1) zum Gruppieren von einzelnen Packungseinheiten (3), wobei die Verpackungsmaschine (1) einen Zuförderer (5) und ein Fördersystem (7) umfasst, **dadurch gekennzeichnet,** desweiteren eine Gruppierstation (9) und einen Etikettierer (11) zu umfassen, wobei die Verpackungsmaschine (1) dazu konfiguriert ist, mindestens drei Packungseinheiten (3) zu einem Packungsstapel (23) übereinanderzustapeln und den Packungsstapel (23) zumindest teilweise mit einem Etikett (27) zu umschließen, wobei die Verpackungsmaschine (1) einen Andrückstempel (37) aufweist, der dazu konfiguriert ist, um mindestens eine scharnierartige Lasche (31) des Etiketts (27) an einer Seitenfläche (51) einer mittleren Packungseinheit (3) des Packungsstapels (23) anzudrücken.

10. Verpackungsmaschine nach Anspruch 9, **dadurch gekennzeichnet, dass** der Etikettierer (11) ein Querbahnetikettierer ist.

11. Verpackungsmaschine nach Anspruch 9 oder 10, **dadurch gekennzeichnet, dass** die Gruppierstation (9) zwei gegenüberliegende Zahnriementransporte (17) mit Mitnehmerleisten (19) umfasst und die Gruppierstation (9) einstellbar ist, um Packungseinheiten (3) unterschiedlicher Größen jeweils zu gruppieren.

12. Verpackungsmaschine nach einem der Ansprüche 9 bis 11, **dadurch gekennzeichnet, dass** das Fördersystem (7) separat steuerbare Mover (21) aufweist, welche derart steuerbar sind, um Packungseinheiten (3) und/oder Packungsstapel (23) kraftschlüssig zwischen jeweils zwei Mover (21) einzuspannen.

13. Verpackungsmaschine nach einem der Ansprüche 9 bis 12, **dadurch gekennzeichnet, dass** das Fördersystem (7) eine Aussparung (40) aufweist, die es erlaubt, das Etikett (27) an einer Unterseite (38) des Packungsstapels (23) anzudrücken.

14. Packungsstapel (23), der eine obere, eine untere und mindestens eine mittlere Packungseinheit (3) aufweist, welche übereinander angeordnet sind, wobei der Packungsstapel (23) desweiteren mindestens ein Etikett (27) umfasst, welches eine Oberseite (39), eine seitliche Seite (49) und eine Unterseite (38) des Packungsstapels (23) zumindest teilweise umspannt, **dadurch gekennzeichnet, dass** das Etikett (27) Etikettenränder (59) und eine von den Etikettenrändern (59) beabstandete Hauptfläche (57) aufweist, wobei die Hauptfläche (57) eine oder mehrere scharnierartig mit der Hauptfläche (57) verbundene Laschen (31) aufweist, welche mit jeweils einer Seitenfläche (51) einer mittleren Packungseinheit (3) des Packungsstapels (23) mittels einer flächigen Haftung verbunden sind.

15. Packungsstapel nach Anspruch 14, **dadurch gekennzeichnet, dass** das Etikett (27) mindestens eine Perforation (61) aufweist, welche nach dem Anbringen des Etiketts (27) auf einen Packungsstapel (23) bevorzugt seitlich in horizontaler Richtung angeordnet ist und dazu geeignet ist, ein Trennen der Packungseinheiten (3) voneinander zu erlauben.
